# EUROPEAN PATENT APPLICATION

(11) **EP 1 950 957 A2**
(43) Date of publication of application: **30.07.2008**
(21) Application number: 08001059.8
(22) Date of filing: 21.01.2008
(51) Int. Cl.: H04N 5/445, H04N 5/44

(54) **Image display system**

(30) Priority: 23.01.2007 JP 2007012534; 23.01.2007 JP 2007012535; 23.01.2007 JP 2007012536
(71) Applicant: Funai Electric Co., Ltd., Daito-shi, Osaka 574-0031 (JP)
(72) Inventor: Ishibashi, Kenji, Daito-shi Osaka 574-0013 (JP)
(74) Representative: Grünecker, Kinkeldey, Stockmair & Schwanhäusser Anwaltssozietät

(57) **Abstract**

This image display system includes an image display device (1), including an image generation unit (11) which generates an image including a predetermined image and an image display unit (10) which displays this generated image, and a remote control device (2), which includes an actuation unit for controlling display by the image display device (1). The remote control device (2) includes a camera (20) which, when the remote control device (2) is pointed towards the image display device (1), can capture an image displayed upon the image display unit (10); and the image generation unit (11) of the image display device (1) compares together the coordinates of the predetermined displayed image displayed upon the image display unit (11), and the coordinates of the captured image of the predetermined image within the image captured by the camera (20), and thereby detects a remote pointing position at which the remote control device (2) is pointing. And the image generation unit (11) generates a displayed cursor image (14a) to be displayed at the remote pointing position, and displays it upon the image display unit (10).

## Description

### BACKGROUND OF THE INVENTION

The present invention relates to an image display system which comprises a television device (hereinafter termed a TV) or a personal computer (hereinafter termed a PC) and a remote control device.

An image display system has been proposed with which any desired position upon a display screen of a TV or a PC may be pointed at by using a remote control device. For example, in Japanese Laid-Open Patent Publication 2003-208260, a camera is provided to a remote control device, and the fixed four corners of the TV screen are detected by processing the image captured by this camera. A method of detecting the orientation of the remote control device by doing this is disclosed. Moreover, in Japanese Laid-Open Patent Publication Heisei 3-176718 and in Japanese Patent No. 3,262,677, a device is proposed in which a light emitting element is provided to the TV, the orientation of a remote control device is detected by capturing an image of this light emitting element with a camera which is provided to the remote control device, and a cursor is displayed corresponding to this orientation of the remote control device which has thus been detected. Furthermore, in Japanese Laid-Open Patent Publication Heisei 9-134250, there is proposed a device in which a camera is provided to a remote control device, change over time is detected of the image from the camera when an image of a TV image is being captured with the camera, and by doing this change of the direction of the remote control device is detected and a cursor is displayed.

With the image display systems described in the above patent documents, a camera is provided to the remote control device, and it is arranged to capture an image of the TV screen with this camera and thereby to detect the orientation of the remote control device; and, by transmitting this information over to the TV, a cursor is displayed corresponding to the orientation of the remote control device.

However, with the device described in Japanese Laid-Open Patent Publication 2003-208260, since the fixed four corners of the TV screen are detected with the camera, it becomes impossible to detect the four corners of the TV with the camera when the remote control device gets too close to the TV. And there is the problem that, due to this, it becomes impossible to display a cursor which corresponds to the orientation of the remote control device.

Moreover, with the device described in Japanese Laid-Open Patent Publication Heisei 3-176718 and in Japanese Patent 3,262,677 as well, image capture by the light emitting element becomes impossible if the remote control device gets too close to the TV. Due to this, it is not possible to perform display of a cursor which corresponds to the orientation of the remote control device. Moreover, if in order to solve this problem the camera upon the remote control device is made to operate at wide angle, then there is the inconvenience that the accuracy is deteriorated at great distances. And also there is also the problem that it is necessary for the light emitting element to be separate.

Furthermore, with the device described in Japanese Laid-Open Patent Publication Heisei 9-134250, since only relative information can be obtained about which of the left, upper, right, and lower sides the remote control device has been moved to, accordingly there is a sense of discomfort during actuation, and moreover, if the contrast of the image is low, then there are the inconveniences that the image processing becomes difficult and the accuracy of detection of the direction of the remote control device is decreased.

Even further, with the above described image display system, it is desirable to make it possible to change the size of the image displayed upon the display screen (for example, the size of a menu image or the like) in correspondence to the position of the user who is holding the remote control device, and to change its display position. In other words, the further the user is away from the screen, the larger the displayed image should be made; and also, when the user shifts left or right from the center of the display screen, the displayed image should also shift left or right in correspondence thereto.

The following image display systems additionally incorporating this type of functionality have been proposed in the prior art.

For example, in Japanese Laid-Open Patent Publication Heisei 08-123612, it is described to install a camera to the side of the display screen, and to change the position and the size of the displayed image based upon the position and size of the user, as captured by this camera.

And, in Japanese Laid-Open Patent Publication 2004-287168, it is described to detect the light emitted by the remote control device with two light reception elements on the TV, to obtain the distance between the TV and the remote control device by trigonometry, and to change the size of the characters upon the display unit in correspondence to this distance.

Moreover, in Japanese Laid-Open Patent Publication Heisei 07-093089, it is described to install a camera to a tablet, and to shift a pointer upon the display screen in correspondence to the position and the movement of the nose of the user, which have been captured by this camera.

With the image display system disclosed in the above described Japanese Laid-Open Patent Publication Heisei 08-123612 and Japanese Laid-Open Patent Publication Heisei 07-093089, a camera is provided as an element of the display device, and an image is captured of the face of the user or of a portion of his body. However, with this type of device, it is difficult to perform accurate recognition of the user, since his face or the portion of his body is not limited to always appearing the same. If the accuracy of image recognition is enhanced, then the time period for image processing in order to perform this recognition becomes longer, and the responsiveness becomes lower. Moreover, if a plurality of users are present within the field of view of the camera, then there is the possibility that it may become impossible to recognize the user.

Furthermore, there are various applications for the above described image display system; for example, it can be applied to a TV telephone.

With the device described in Japanese Laid-Open Patent Publication 2001-078161, an optical signal transmission unit is provided to the remote control device, and the position of the remote control device is specified by an optical sensor upon the TV. Based upon the position of this remote control device, the user who is holding the remote control device is photographed while automatically varying the orientation and the focal point distance of the camera.

And, with the device described in Japanese Laid-Open Patent Publication Heisei 07-115632, an ultrasound oscillator is provided to the remote control device, and the position of the remote control device is specified by a sensor upon the TV. Based upon the position of this remote control device, the user who is holding the remote control device is photographed while automatically varying the orientation and the focal point distance of the camera.

Moreover, with the image display system described in Japanese Laid-Open Patent Publication 2001-078161 and in Japanese Laid-Open Patent Publication Heisei 07-115632, an optical signal transmission unit or an ultrasound oscillator or the like is provided to the remote control device, and the position of the remote control device is specified based upon information from this sensor.

However, with these systems, there are the inconveniences that it is difficult to measure the position of the remote control device accurately, and moreover that it is necessary to provide a complicated sensor system to the remote control device and to the image display device, so that the cost becomes high.

An object of the present invention is to supply an image display system which can correctly detect the orientation of a remote control device, even when the remote control device is approached close to a TV or PC, or is removed far therefrom.

Another object of the present invention is to supply an image display system which can recognize the position of a user with high accuracy at low cost, by capturing an image which is being displayed upon the image display unit with a camera which is an element of the remote control device, and by detecting the position of the user based thereupon.

Yet another object of the present invention is to supply an image display system which can capture an image of a human being who is holding a remote control device, by correctly detecting the orientation and the position and so on of the remote control device, with respect to the image display device.

### SUMMARY OF THE INVENTION

The image display system of the present invention includes: an image display device, including an image generation unit which generates an image including a predetermined image, and an image display unit which displays this generated image; and a remote control device, which includes an actuation unit for controlling display by said image display device, and which transmits details of actuation performed upon said actuation unit to said image display device; wherein said remote control device includes a camera which, when said remote control device is pointed towards said image display device, can capture an image displayed upon said image display unit, and: said image generation unit of said image display device creates an image to be displayed by said image display unit, based upon the display state of said displayed image which has been captured by said camera.

And the remote control device may further include: a position detection unit which compares together the coordinates of a predetermined display image which is being displayed upon said image display unit, which have been acquired from said image display device, and the coordinates of the captured image of said predetermined image within the image captured by said camera, and thereby detects a remote pointing position upon the display screen of said image display unit, at which said remote control device is pointing; and a transmission unit which transmits said remote pointing position detected by said position detection unit to said image display device; wherein said image generation unit of said image display device creates a displayed cursor image, which is displayed in said remote pointing position.

As one example, said predetermined display image may be a displayed cursor image, and said captured image of the predetermined image may be a captured cursor image.

Furthermore, said remote control device may further include a memory which stores in advance a reference cursor image which constitutes a reference for said displayed cursor image; and said position detection unit may extract said captured cursor image within the image captured by the camera by using said reference cursor image which is stored in said memory.

With the structure described above, if for example a reference cursor image is stored in the memory of the remote control device, then the image on the image display unit which is captured by the camera is compared by the position detection unit with a reference cursor image which is stored in the memory. If, at this time, it is possible to find a captured cursor image within the image of the image display unit which is captured by the camera, then the coordinates of the displayed cursor image at this time are acquired from the image display device by infrared rays or wireless or the like. By correlating the coordinates of this displayed cursor image which have been acquired and the coordinates of the captured cursor image which has been captured by the camera, in other words by calculating a matrix which specifies the projective relationship of these two images, it is possible to detect the position upon the image display unit at which the remote control device is pointing. In concrete terms, it is possible to detect the XY coordinates upon the image display screen of the point (the so called remote pointing position) at which the remote control device is pointing.

The displayed cursor image is generated by the image display device based upon this remote pointing position. By repeating this operation, when the remote control device shifts, it is possible to shift the position of the displayed cursor image which is being displayed upon the image display unit in correspondence thereto.

Furthermore, the image display system of the present invention may include an image display device, including an image generation unit which generates an image including a predetermined image, and an image display unit which displays this generated image; and a remote control device, which includes an actuation unit for controlling display by said image display device, and which transmits details of actuation performed upon said actuation unit to said image display device; and the remote control device may further include: a position detection unit which compares together the coordinates, acquired from said image display device, of a predetermined displayed image which is being displayed upon said image display unit, and the coordinates of a captured image of a predetermined image within the displayed image captured by said camera, and thereby may detect the orientation of said remote control device with respect to said image display unit, and the relative position of said remote control device, which specifies the distance between said image display unit and said remote control device; and a transmission unit which transmits said orientation and said relative position of said remote control device, which have been detected by said position detection unit, to said image display device; and said image generation unit of said image display device may set a display state of the image which is displayed upon said image display unit, based upon said orientation and said relative position of said remote control device.

The predetermined displayed image may be a displayed cursor image, and said captured image of the predetermined image may be a captured cursor image.

The remote control device may further include a memory which stores in advance a reference cursor image which constitutes a reference for said displayed cursor image; and said position detection unit may extract said captured cursor image within the image captured by the camera by using said reference cursor image which is stored in said memory.

As a first example, said image generation unit may set the display state of said displayed image, based upon the orientation of said remote control device which has been transmitted from said transmission unit, so that said displayed image is displayed upon the display screen of said image display unit in the position closest to said remote control device.

As a second example, said image generation unit may set the display state of said displayed image, based upon said relative position which has been transmitted from said transmission unit, so that said displayed image is displayed larger, the greater is the distance between said image display unit and said remote control device.

Furthermore, according to another aspect thereof, the image display system of this invention includes: an image display device, including an image generation unit which generates an image including a predetermined image, and an image display unit which displays this generated image; a remote control device, which includes an actuation unit for controlling display by said image display device, and which transmits details of actuation performed upon said actuation unit to said image display device; and a first camera which captures an image of a scene in front of said image display unit; and said remote control device includes: a second camera which, when said remote control device is pointed towards said image display device, can capture an image displayed upon said image display unit; a position detection unit which compares together the coordinates of a predetermined display image which is being displayed upon said image display unit, which have been acquired from said image display device, and the coordinates of the captured image of said predetermined image within the image captured by said second camera, and thereby detects the orientation of said remote control device with respect to said image display unit, and the relative position of said remote control device, which specifies the distance between said image display unit and said remote control device; and a transmission unit which transmits said orientation and said relative position of said remote control device, detected by said position detection unit, to said image display device; and said first camera includes a camera control unit which controls the image capture direction of said first camera, based upon the orientation and the relative position of said remote control device which have been transmitted from said transmission unit.

The first camera is typically provided to the image display device.

The predetermined displayed image may be a displayed cursor image, and the captured image of the predetermined image may be a captured cursor image.

As a first example, said camera control unit may control the zoom amount of said first camera, based upon the orientation and the relative position of said remote control device, which have been transmitted from said transmission unit.

As a second example, said camera control unit may control said zoom amount so that the size of a photographic subject which is captured by said first camera remains fixed, irrespective of said orientation and said relative position of said remote control device.

### BRIEF DESCRIPTION OF THE DRAWINGS

Fig. 1 is a structural diagram of an image display system which is an embodiment of the present invention;
Fig. 2A shows a displayed cursor image;
Fig. 2B shows a captured image of this cursor;
Fig. 3 shows a remote pointing position of a remote control device;
Fig. 4A shows the screen size and screen shape of an image display unit;
Fig. 4B shows an image captured by a camera of a predetermined image;
Fig. 5A shows one example of the size of the displayed cursor image with respect to the position of the remote control device;
Fig. 5B shows another example of the size of the displayed cursor image with respect to the position of the remote control device;
Fig. 6 is a flow chart schematically showing the operation of a control unit;
Fig. 7 is another flow chart schematically showing the operation of this control unit;
Figs. 8A through 8F are figures schematically showing examples of display upon a display screen;
Fig. 9 is a flow chart schematically showing the operation of a control unit of another embodiment;
Fig. 10 is a flow chart schematically showing the operation of a control unit of another embodiment;
Fig. 11 is a structural diagram of an image display system according to yet another embodiment;
Fig. 12 is a flow chart schematically showing the operation of a control unit of still another embodiment;
Fig. 13 is a flow chart schematically showing the operation of a control unit of yet another embodiment; and
Fig. 14 is an example of a display upon a display screen of a further embodiment.

### DETAILED DESCRIPTION OF THE INVENTION

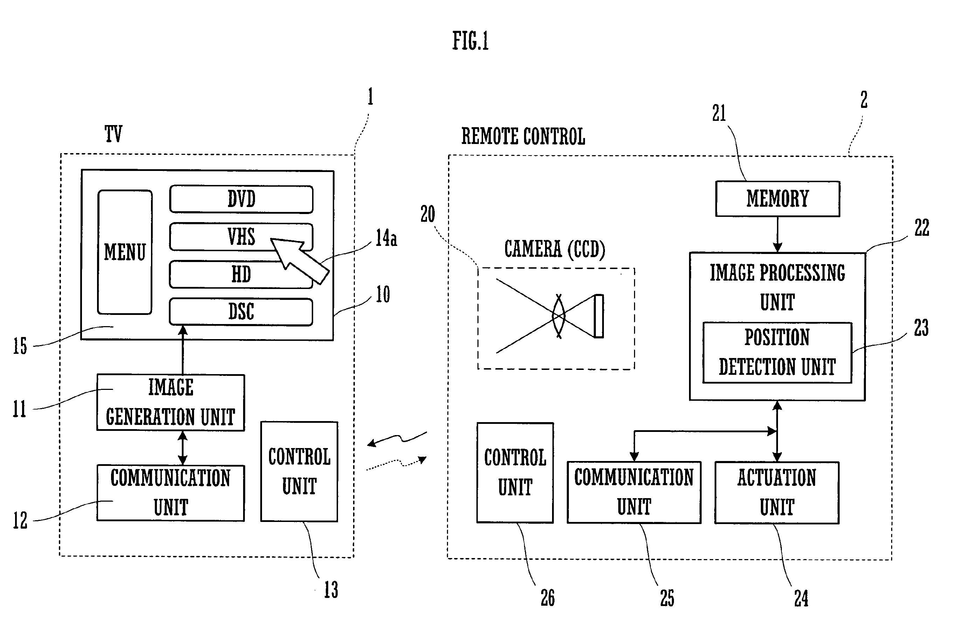

Fig. 1 is a structural diagram of an image display system which is an embodiment of the present invention.

This image display system comprises a television device (hereinafter termed a "TV") 1, which is an image display device, and a remote control device 2. Instead of being the TV 1, the image display device could also be a device such as a personal computer or the like which includes an image display unit.

The TV 1 comprises an image display unit 10, an image generation unit 11, a communication unit 12 which performs communication with the remote control device 2, and a control unit 13 which performs overall control of the TV 1.

The image display unit 10 can display a TV image of a channel which has been selected by the remote control device 2 upon a display screen 15, or can display a menu image such as the one schematically shown in the figure. When a menu image is being displayed, a cursor image 14a as shown in the figure (hereinafter termed the "displayed cursor image") is also displayed. By shifting the position of this displayed cursor image 14a as desired with the remote control device 2, and by further performing predetermined key actuation, it is possible to transfer the command indicated by the displayed cursor image 14a to the control unit 13.

The remote control device 2 comprises a CCD camera 20 (hereinafter termed the "camera"), a memory 21 which stores a reference cursor image, an image processing unit 22 which correlates the coordinates of the captured cursor image within the image which has been captured by the camera 20 and the coordinates of the displayed cursor image 14a which have been transmitted from the TV 1, and thereby detects the remote pointing position upon the display screen 15 of the TV 1 at which the remote control device 22 is pointing, an actuation unit 24, a communication unit 25, and a control unit 26.

The actuation unit 24 includes a plurality of keys, and when each of these keys is actuated, it transmits a corresponding command to the TV 1 via the communication unit 25. The communication unit 25 performs transmission and reception of data to and from the communication unit 12 of the TV 1 by using infrared rays (IrDA) or radio waves upon the multi-GHz band. The coordinates of the displayed cursor image 14a which is being displayed upon the display screen 15 of the TV 1 are included in this data which is transmitted and received. Moreover, the remote pointing position which is calculated by the image processing unit 22 is included in the data which is transmitted and received.

The control unit 26 performs overall control of the remote control device 2.

The image processing unit 22 comprises a position detection unit 23 which performs calculations for detecting the position at which the remote control device 2 is pointing (the remote pointing position).

The image display system of Fig. 1 has a first function in which the remote control device 2 functions in its normal manner, and a second function.

In the first function, the details of an actuation upon the actuation unit 24 (i.e. an actuation command) are transmitted to the TV 1.

In the second function, the remote pointing position which has been calculated by the position detection unit 23 of the image processing unit 22 is transmitted to the TV 1 by the communication unit 25.

In this second function, the entire image which is being displayed upon the display screen 15 of the image display unit 10 is captured by the camera 20, this entire image which has been captured by the camera 20 is compared with a reference cursor image which is stored in the memory 21, and the position of the cursor image (i.e. of the captured cursor image) is extracted from within the captured image. Next, the coordinates of the displayed cursor image 14a are acquired from the TV 1 via the communication unit 25, these coordinates of the displayed cursor image 14a and the coordinates of the captured cursor image are compared together, and thereby the position upon the display screen 15 of the TV 1 which is being pointed at by the camera 20, in other words the remote pointing position pointed at by the remote control device 2, is detected.

The TV 1 receives this remote pointing position which has been detected by the remote control device 2 with the communication unit 12, and the image generation unit 11 generates a displayed cursor image 14a to be displayed in this remote pointing position, and displays it upon the display screen 15.

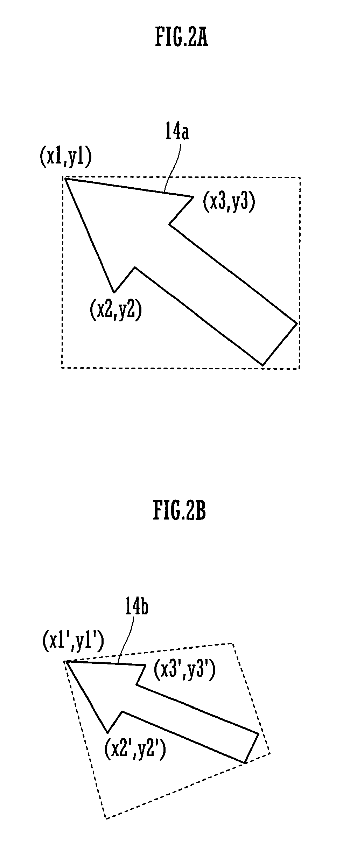

Fig. 2 shows the displayed cursor image 14a (Fig. 2A) which is being displayed upon the TV 1 and the captured cursor image 14b (Fig. 2B) which has been captured by the camera 20. It should be understood that the reference cursor image, which constitutes a reference for the displayed cursor image 14a (Fig. 2A) is stored in the memory 21. However, no coordinates are stored in the memory 21 for this reference cursor image. The coordinates of the displayed cursor image shown in Fig. 2A are transmitted from the TV 1, as will be described hereinafter. The captured cursor image 14b is extracted by the image processing unit 22 from the image which has been captured by the camera 20 by a per se known method of image recognition, using the reference cursor image. Moreover, it queries the TV 1 for the coordinates of the displayed cursor image 41a at this time, and acquires them. It should be understood that, here, the coordinates (x1,y1), (x2,y2), and (x3,y3) of three points upon the display screen 15 which indicate specific points upon the displayed cursor image 14a are acquired. Here, the coordinates of the end position of the displayed cursor image 14a are (x1,y1).

The coordinates (x1,y1) , (x2,y2), and (x3,y3) of the three specific points of the displayed cursor image 14a upon the display screen 15, and the coordinates (x1',y1'), (x2',y2'), and (x3',y3') of the specific points corresponding respectively thereto of the captured cursor image 14b, which has been captured by the camera 20, are compared together by the image processing unit 22, and their projective relationship is calculated. By this calculation, it is possible to specify the relationship between the coordinate system of the camera 20 and the coordinate system upon the display screen 15, and it is possible to obtain the remote pointing position upon the display screen 15. At the same time, it is possible to detect the relative position and direction of the remote control device 2 with respect to the display screen 15.

When a predetermined actuation (for example, an actuation in order to perform display of a menu image) is performed with the actuation unit 24, then this menu image and the displayed cursor image 14a are displayed upon the display screen 15 of the TV 1. The displayed cursor image 14a at this time is displayed in the center of the screen 15.

In this state in which the displayed cursor image 14a is being displayed in the central position of the display screen 15 of the TV 1, the position detection unit 23 of the image processing unit 22 extracts a captured cursor image 14b from within the image captured by the camera 20, using the reference cursor image. Moreover, it acquires the coordinates of the displayed cursor image 14a from the TV 1. And it compares together the coordinates of the captured cursor image 14b and the coordinates of the displayed cursor image 14a. By doing this, it is possible to detect the remote pointing position upon the display screen 15 at which the remote control device 2 is pointing.

Thus, this remote pointing position is transmitted to the TV 1 by the communication unit 25. A new cursor image 14a to be displayed in the remote pointing position is generated by the TV 1, and this is displayed upon the display screen 15. Accordingly when, in the state in which the displayed cursor image 14a is displayed in the central position of the display screen 15, the remote control device 2 which is pointed towards the TV 1 is shifted or rotated only slightly, then the displayed cursor image 14a tracks this movement.

Next, when the remote control device 2 is further shifted or rotated, the displayed cursor image 1a which is displayed upon the display screen 15 is shifted by the same operation as described above. In other words, the displayed cursor image upon the display screen 15 tracks the shifting of the remote control device 2. Due to this, when the remote control device 2 shifts or rotates, the displayed cursor image 14a shifts over the display screen 15 so as to track after it. And, when some specified key upon the actuation unit 24 of the remote control device 2 is actuated in the state in which the displayed cursor image 14a has been shifted to a predetermined position, then it becomes possible to input to the control unit 13 that command, at the position of which upon the display screen the displayed cursor image 14a is pointing.

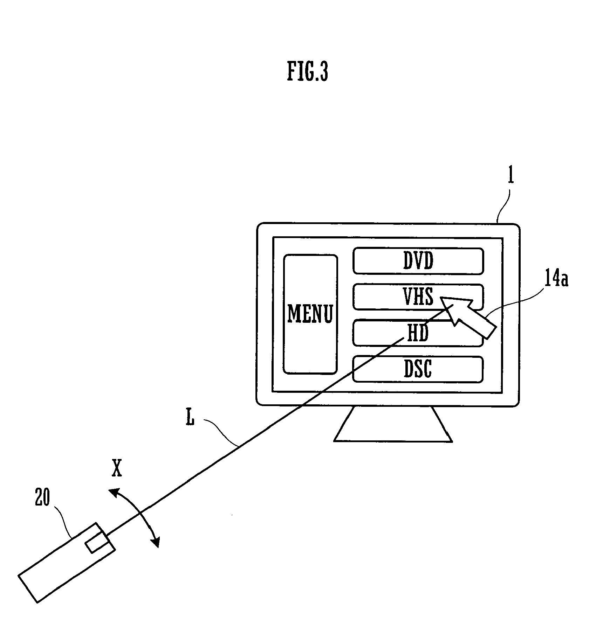

The displayed cursor image 14a described above can be shifted over the display screen 15 whether the remote control device 2 is approached near to the CV 1 or is not approached very closely thereto, provided that the camera 20 is able to capture an image of the displayed cursor image 14a. Fig. 3 shows the remote pointing position of the remote control device 2 with respect to the display screen 15 of the TV 1. The line of sight L of the camera 20 which is housed in the remote control device 2 is positioned upon the tip end portion of the displayed cursor image 14a upon the display screen 15. When in this state the remote control device 2 is rotated in the direction of the arrow sign X, the line of sight L also rotates in the X direction in correspondence thereto, and the displayed cursor image 14a which is displayed upon the display screen 15 also shifts corresponding thereto.

In the embodiment described above, when a predetermined actuation by the actuation unit 24 of the remote control device 2 is performed (such as actuation to display a menu image or the like), the displayed cursor image 14a is displayed in the central position of the display screen 15 of the TV 1. Accordingly, the displayed cursor image 14a is shifted over the display screen 15 so as to track the shifting or the rotating of the remote control device 2, from when this predetermined actuation has been performed.

By displaying the displayed cursor image in the central position upon the display screen 15 when a predetermined actuation is performed with the actuation unit 24 of the remote control device 2 in this manner, extraction of the captured cursor image 14b by the image processing unit 22 is ensured even if the remote control device 2 is approached quite close to the TV 1, since the displayed cursor image 14a certainly enters within the field of view of the camera 20.

If the viewing angle of the camera 20 is extremely wide, the initial position of the displayed cursor image 14a when the predetermined actuation is performed with the actuation unit 24 need not necessarily be at the center. For example, it would also be possible to employ the central position of the region in which the menu on the left side of Fig. 1 is displayed as the initial position. The initial position may be as desired. As another embodiment, it would also be acceptable to arrange to store in the memory 21 the screen size and screen shape of the image display unit 10 as the predetermined reference image, along with or instead of the reference cursor image.

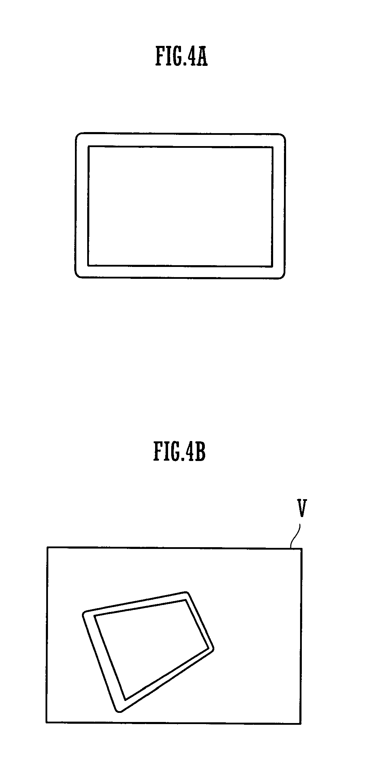

Fig. 4A shows the screen size and the screen shape of the image display unit 10. The memory 21 stores this predetermined reference image along with the reference cursor image, or instead of the reference cursor image. And Fig. 4B shows the captured image of this predetermined image, which has been captured by the camera 20. By storing the screen size and screen shape of the image display unit 10 in the memory 21 in this manner as the predetermined reference image, it is possible to detect the remote pointing position, provided that the entire image display unit is being displayed within the field of view "V" of the camera 20. In concrete terms, three specific points may be extracted and stored from the size and shape of the screen. And the captured image of the predetermined image is extracted from the image produced by the camera 20, using the predetermined reference image (the screen size and screen shape of the image display unit 10) which is stored in the memory 21. The coordinates of three points in this captured image of the predetermined image which has thus been extracted, which correspond to the above described specific points, are obtained, and the remote pointing position is calculated by calculating their projective relationship.

Moreover, when the displayed cursor image 14a and the captured cursor image 14b which has been captured by the camera 20 are compared together by the position detection unit 23 of the remote control device 2, the above coordinates of at least three points are correlated. By doing this, along with detecting (i.e. calculating) the remote pointing position, it is also possible to detect (i.e. to calculate) the relative position of the remote control device 2 with respect to the image display device 1 (i.e. the distance between them). Thus, the size of the cursor image 14 which is displayed upon the display screen 15 may be controlled according to this relative position (i.e. distance). By performing this control, it becomes possible to enhance the visibility of the cursor image 14 to the camera 20, and thus it is possible to enhance the detection accuracy for the remote pointing position. In other words, the size of the displayed cursor image 14a may be reduced if the distance becomes smaller, and may be increased if the distance becomes greater.

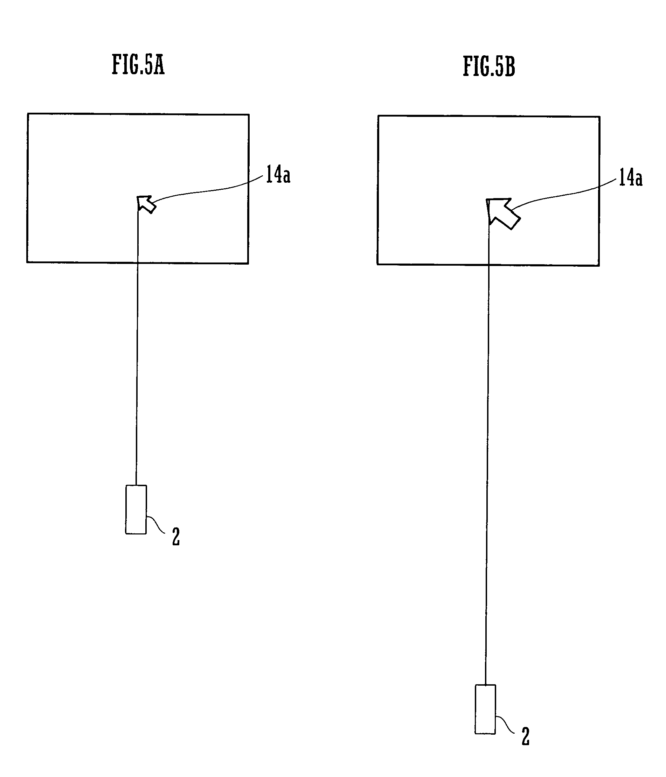

Figs. 5A and 5B are figures showing the size of the displayed cursor image 14a with respect to the position of the remote control device 2. In Fig. 5B, the cursor image 14 is relatively large, since the remote control device 2 is far away from the TV 1. It should be understood that, by changing the position of the displayed cursor image 14a according to the position of the remote control device 2, the advantageous effect is also obtained of enhancing the visibility to the operator, both at remote range and at close range. The relative position (i.e. distance) which has been obtained in the above manner need not only control the size of the displayed cursor image 14a, but may also be used for controlling the sound volume upon the TV 1. In other words, when the distance between the operator and the TV 1 becomes great, the sound volume of the TV 1 may be increased, and when this distance becomes small the sound volume may be reduced. Apart from this, it is also possible to exert various other different forms of control according to the distance between the remote control device 2 and the TV 1.

Next, the operation of the control unit 26 of the remote control device 2 will be explained.

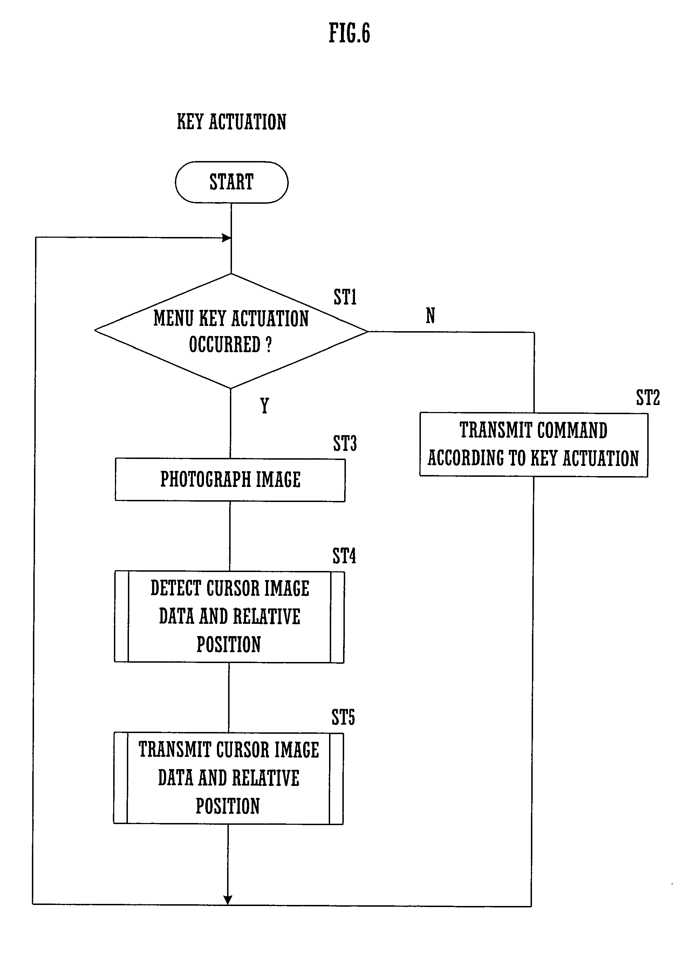

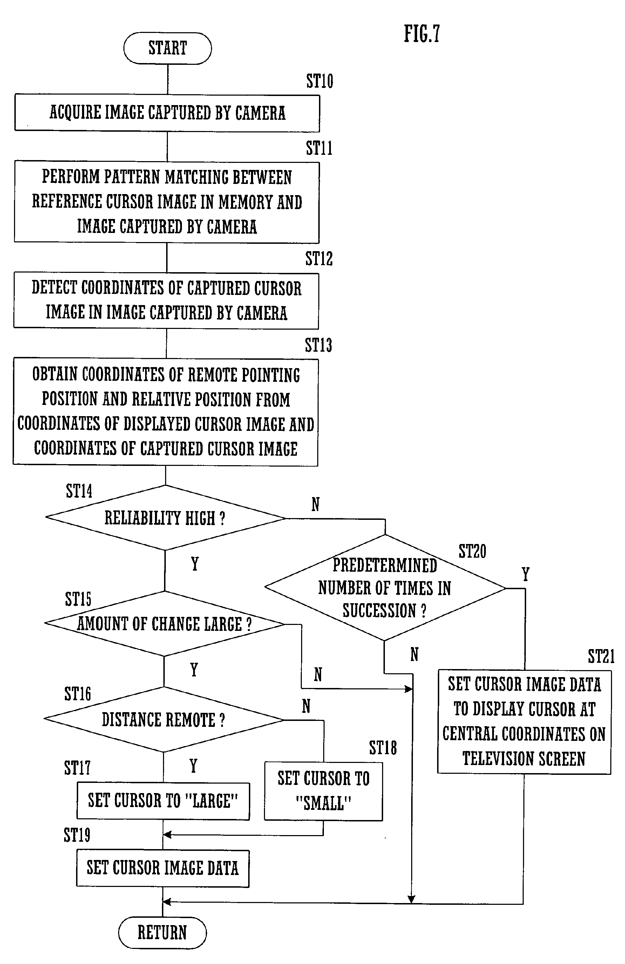

Figs. 6 and 7 are flow charts schematically showing the operation of this control unit 26. In Fig. 6, when a key is actuated upon the actuation unit 24, a decision is made as to whether or not this key actuation is a menu key actuation (a step ST1). If this is actuation of a normal channel key or is some actuation other than a menu key, then a command corresponding to this key actuation is transmitted to the TV 1 (a step ST2).

However, if in the above step ST1 it is decided that this is a menu key actuation, then the image in front of the camera 20, in other words the image which is being displayed upon the image display unit 10 of the TV 1, is captured by the camera 20 (a step ST3). Moreover, based upon this image which has been captured and a reference cursor image which is stored in the memory 21, an operation of calculating cursor image data for determining the display position and the size of a displayed cursor image 14a (the remote pointing position), and an operation of detecting the position of the remote control device 2 (i.e. the relative position of the remote control device 2 with respect to the TV 1), which gives the distance between them, are performed (a step ST4). And the cursor image data and the position of the remote control device 2 (its relative position) determined in the above described step ST4 are transmitted to the TV 1 (a step ST5).

Fig. 7 shows the operation in the above step ST4.

First, the image captured by the camera 20 is acquired (a step ST10). And pattern matching is performed between this image and the reference cursor image which is stored in the memory 21 (a step ST11). By the above pattern matching, the coordinates of the captured cursor image 14b within the image captured by the camera are detected (a step ST12). At this time, the coordinates of at least three points in the captured cursor image 14b are detected (in the step ST12), as shown in Fig. 2. And the coordinates of the displayed cursor image 14a at this time are received from the TV 1. The coordinates of the remote pointing position and the position of the remote control device (i.e. its relative position) are obtained from the coordinates of this displayed cursor image 14a and the coordinates of the captured cursor image 14b (a step ST13). As previously described, along with it being possible to obtain the remote pointing position upon the display screen 15 by calculation if the coordinates of three or more points are available, it is also possible to obtain the position of the remote control device 2 (i.e. the relative position of the remote control device 2 with respect to the TV 1) by calculation. The greater is the number of points (the number of coordinate points) which are used in this calculation, the higher is the accuracy of the calculation. However, the burden upon the control unit 26 becomes heavy, since to this degree the amount of calculation is also increased.

Next, the reliability of the result which has been calculated as above is determined upon (a step ST14). There are various types of technique for determining this reliability. For example, since the area around the TV 1 is bright, if the density differences in the image captured by the camera 20 are not large, or if the inclination of the remote control device 2 with respect to the display screen 15 of the TV 1 is greater than some fixed value, then it may be decided that the reliability is low. If the reliability is low, then the flow of control proceeds to a step ST20, and a decision is made as to whether or not this decision that the reliability is low has been made a predetermined number of times in succession. If the number of times the decision has been made in succession is less than the predetermined number of times, then the flow of control returns and the above operation is performed again. However, if in the step ST20 it is decided that the decision has been made for the predetermined number of times in succession, then setting of the cursor image data is performed so that the displayed cursor image 14a is displayed in the central position upon the display screen 15 of the TV 1 (a step ST21).

If in the step ST14 described the reliability is greater than the fixed value, then in a step ST15 a decision is made as to whether or not the amount of change is large. In other words, if the remote pointing position or the relative position which has been calculated in the step ST13 is changed from its value when it was calculated in the step ST13 during the previous time this process was executed, and if moreover this amount of change is greater than a fixed value, then the flow of control proceeds to a step ST16. In this step ST16, if the distance between the TV 1 and the remote control device 2 is greater than a fixed distance value, in other words if the relative position obtained in the step ST13 is separated from the TV 1 by more than the fixed distance value, then in a step ST17 a cursor attribute data item is set to "large". But if this is not the case, then in a step ST18 this cursor attribute data item is set to "small". And cursor image data is set which includes this cursor attribute data item and the remote pointing position which was obtained in the step ST13 described above (a step ST19). If in the step ST15 it was decided that the amount of change was small, then setting of change of the cursor coordinates is not performed. Due to this, minute unintentional vibration caused by the camera 20 of the remote control device being shaken by the operator is ignored.

The cursor image data set in the step ST19 described above, or the cursor image data set in the step ST21, and the position (the relative position) of the remote control device which was calculated in the step ST13, are transmitted to the TV 1 in the step ST5 of Fig. 6.

The above described data is received by the TV 1 via its communication unit 12. And, based upon the above described data which has been received, the displayed cursor image 14a is generated by the image generation unit 11. The image display unit 10 displays the displayed cursor image 14a which has been created in this manner upon the display screen 15.

It should be understood that, as previously described, it would also be acceptable to store a menu image in the memory 21 as a reference menu image (i.e. as the predetermined reference image). In this case, pattern matching would be performed between the image captured by the camera in the step ST11 of Fig. 7, and the reference menu image which is stored in the memory 21. And the coordinates of the captured menu image would be detected in the step ST12. Moreover, in the step ST13, the remote pointing position and the position of the remote control device (its relative position) would be calculated based upon the coordinates of the displayed menu image (which would be transmitted from the TV 1) and the coordinates of the captured menu image. It should be understood that, if the coordinates of the displayed menu image are fixed, then it would also be acceptable to store these coordinates in the memory 21 in advance. In this case, it would not be necessary to transmit this information from the TV 1.

Moreover, when actuation of a menu key is detected in the step ST1 of Fig. 6, it would also be possible, temporarily at this time point, to set the cursor image data shown in the step ST21 of Fig. 7, and to transmit this data over to the TV 1. If this is done, then, when actuation of a menu key occurs, the displayed cursor image 14a is directly displayed in the center position of the display screen 15. Accordingly, the comparison in the step S13 of Fig. 7 between the displayed cursor image and the captured cursor image becomes assured.

In another embodiment of the present invention it would also be acceptable to arrange, when a menu image is displayed upon the TV 1, to transmit this menu image to the remote control device 2, and to store this in the memory 21 as the reference menu image. At the same time, the coordinates of this reference menu image are also transmitted. If this is done, even if there are a plurality of menu images, it is still possible to set some reference menu image which is stored in the memory 21 appropriately to correspond to each menu.

In yet another embodiment of the present invention, it is possible to provide the position detection unit 23 which is included in the image processing unit 22 of Fig. 1 as an element of the TV 1.

In this embodiment, the memory 21 and the position detection unit 23 in the remote control device 2 are not required. On the other hand, it is necessary for the communication unit 25 to be endowed with the function of transmitting the image which has been captured by the camera 20 to the TV 1 at high speed. In other words, there is a requirement for providing a high bandwidth communication function to the communication unit 25 of the remote control device 2 and to the communication unit 12 of the TV 1. With this TV 1, the captured cursor image 14b which has been received by the communication unit 12 and the displayed cursor image 14a which is being displayed upon the display screen at that time are compared together, and thereby the remote pointing position and the position of the remote control device 2 (i.e. its relative position) are detected. This detection method is similar to that in the embodiment described above. And, based upon the remote pointing position which has thus been detected, the image generation unit 11 creates a new displayed cursor image 14a for being displayed in this position, and the image display unit 10 displays this displayed cursor image 14a upon the display screen 15. Moreover, the image generation unit 11 changes the size of the displayed cursor image 14a based upon the position (i.e. the relative position) of the remote control device which has been detected.

Although in the embodiments described above the shape of the displayed cursor image 14a was an arrow sign, it would also be possible to employ any desired shape, such as a triangle shape, a palm shape, or some other shape.

Next, yet another embodiment of the image display system of the present invention will be explained. This system has the same structure as the system shown in Fig. 1 and described above.

Thus, referring to Fig. 1 in relation to this embodiment, the image display unit 10 is able to display a TV image upon a channel that has been selected with the remote control device 2 upon the display screen 15, and also to display a menu image such as that shown in the figure. Furthermore, when an electronic mail function is provided, it is also able to display a guidance legend that notifies the user of the arrival of mail; and, when a TV telephone function is provided, it is able to display a facial image of the other party in a telephone conversation.

When a menu image is displayed, a displayed cursor image 14a is displayed as shown in the figure. This displayed cursor image 14a can be shifted to any desired position using the remote control device 2, and moreover, by performing a predetermined key actuation, the command which is being pointed at by the displayed cursor image 14a can be sent to the control unit 13.

The remote control device 2 comprises a CCD camera 20 (hereinafter termed the "camera"), a memory 21 which stores a reference cursor image, an image processing unit 22 including a position detection unit 23 which correlates the coordinates of a captured image 14b of the cursor which has been captured by the camera 20 and the coordinates of the displayed cursor image 14a which have been transmitted from the TV 1, and thereby detects the orientation of the remote control device 2 and the relative position of the remote control device 2 (i.e. the distance between the image display device 1 and the remote control device 2), an actuation unit 24, a communication unit 25, and a control unit 26.

The image processing unit 22 comprises a position detection unit 23 which performs calculations for detecting the orientation of the remote control device 2 and the relative position of the remote control device 2. The image display system of this embodiment has a first function in which the remote control device 2 functions in its normal manner, and a second function.

In the first function, the details of an actuation upon the actuation unit 24 (i.e. an actuation command) are transmitted to the TV 1.

In the second function, the orientation of the remote control device 2 and the relative position of the remote control device 2 which have been calculated by the position detection unit 23 of the image processing unit 22 are transmitted to the TV 1 by the communication unit 25.

In this second function, the entire image which is being displayed upon the display screen 15 of the image display unit 10 is captured by the camera 20, this entire image which has been captured by the camera 20 is compared with a reference cursor image which is stored in the memory 21, and the position of the cursor image 14b (i.e. of the captured cursor image) is extracted from within the captured image. Next, the coordinates of the displayed cursor image 14a are acquired from the TV 1, these coordinates of the displayed cursor image 14a and the coordinates of the captured image 14b of the cursor are compared together, and thereby the orientation of the remote control device 2 and the relative position of the remote control device 2 are detected.

The TV 1 receives this orientation of the remote control device 2 and this relative position of the remote control device 2 which have been detected by the remote control device 2 with the communication unit 12, and the image generation unit 11 sets the display state of the displayed image. By setting the display state of the displayed image, is meant that the size of its characters is changed, that the display position of the menu image is changed, and so on.

Referring to Fig. 2 in relation to this embodiment, the coordinates (xl,y1), (x2,y2), and (x3,y3) of the three specific points of the displayed cursor image 14a upon the display screen 15, and the coordinates (x1',y1'), (x2',y2'), and (x3',y3') of the three specific points corresponding respectively thereto of the captured cursor image 14b, are compared together by the image processing unit 22, and their projective relationship is calculated. By this calculation, it is possible to specify the relationship between the coordinate system of the camera 20 and the coordinate system upon the display screen 15, and it is possible to obtain the remote pointing position upon the display screen 15. At the same time, it is possible to detect the relative position and orientation of the remote control device 2 with respect to the display screen 15.

When a predetermined actuation (for example, an actuation in order to perform display of a menu image) is performed with the actuation unit 24, then this menu image and the displayed cursor image 14a are displayed upon the display screen 15 of the TV 1. The displayed cursor image 14a at this time is displayed in the center of the screen 15.

In this state in which the displayed cursor image 14a is being displayed in the central position of the display screen 15 of the TV 1, the position detection unit 23 of the image processing unit 22 extracts a captured cursor image 14b from within the image captured by the camera 20, using the reference cursor image. Moreover, it acquires the coordinates of the displayed cursor image 14a from the TV 1. And it compares together the coordinates of the captured cursor image 14b and the coordinates of the displayed cursor image 14a. By doing this, it is possible to detect the orientation of the remote control device 2.

Moreover, by correlating the reference cursor image 14a and the captured cursor image 14b, it is also possible to detect the relative position of the remote control device 2 (i.e. the distance between the display screen 15 and the remote control device 2).

Thus, this orientation of the remote control device 2 and this relative position of the remote control device 2 are transmitted to the TV 1 by the communication unit 25. And, based upon the orientation of the remote control device 2 that has been received by the TV 1, the display position of the menu image or the like is displayed in the position which is closestto the remote control device 2, and the size of the characters is varied based upon the relative position of the remote control device 2. In other words, the further that the remote control device 2 is from the TV 1, the larger the size of the characters is made.

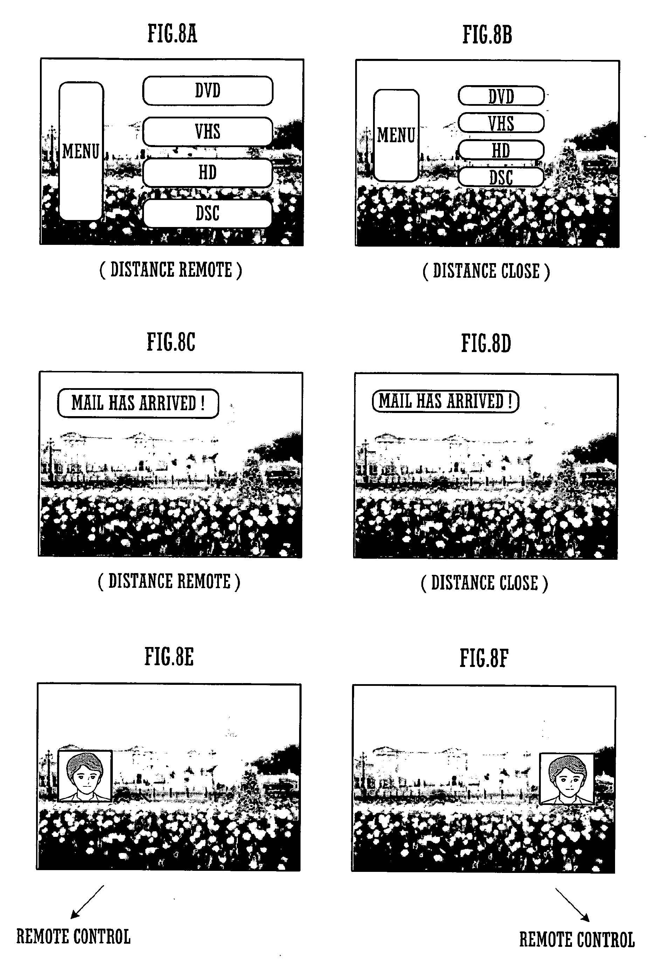

Figs. 8A through 8F are figures schematically showing examples of display upon the display screen 15.

Figs. 8A and 8B are examples of display of menu images. Fig. 8A shows a display example when the remote control device 2 is far away from the TV 1 (i.e. when its distance away therefrom is large), while Fig. 8B shows a display example when the remote control device 2 is close to the TV 1 (i.e. when its distance away therefrom is small).

The further the remote control device is from the TV 1, the larger the menu image becomes. Furthermore, the display characters also become larger.

Figs. 8C and 8D are examples of display of images showing that email has arrived. Fig. 8C shows a display example when the remote control device 2 is far away from the TV 1 (i.e. when its distance away therefrom is large), while Fig. 8D shows a display example when the remote control device 2 is close to the TV 1 (i.e. when its distance away therefrom is small).

The further the remote control device is from the TV 1, the larger the characters in the "mail has arrived" legend become. Figs. 8E and 8F are examples of display of images when the TV telephone function has been selected. In the TV telephone function, the face of the opposite party in a conversation is displayed upon the display screen 15.

Fig. 8E shows a display example when the remote control device 2 is shifted to the left side with respect to the display screen 15 with the center position of the screen taken as a reference, while Fig. 8F shows a display example when the remote control device 2 is shifted to the right side with respect to the display screen 15 with the center position of the screen taken as a reference.

When the remote control device 2 is shifted to the left side, the facial image is also shifted to the left side, while, when the remote control device 2 is shifted to the right side, the facial image is also shifted to the right side.

In Figs. 8E and 8F, when the remote control device 2 is far from the TV 1, the facial image which is displayed becomes large. Conversely, when the remote control device 2 is close to the TV 1, the facial image which is displayed becomes small.

The above control is performed by the image generation unit 11 of the TV 1, based upon the orientation of the remote control device 2 and the relative position of the remote control device 2.

In this embodiment, the display of the displayed cursor image 1a is controlled so that the displayed cursor image 14a tracks change of position of the remote control device 2. Since the orientation of the remote control device 2 is information which is equivalent to the remote pointing position upon the display screen 15 of the remote control device 2, accordingly the image generation unit 111 of the TV 1 controls the display of the displayed cursor image 14a, based upon this information about the orientation of the remote control device 2, so that the displayed cursor image 14a tracks the orientation of the remote control device 2 upon the display screen 15. Thus when, in the state in which the displayed cursor image 14a is displayed in the central position of the display screen 15, the remote control device 2 is shifted or rotated by a small amount towards the TV 1, the displayed cursor image 14a tracks this movement. And, when a specified key is actuated upon the actuation unit 24 of the remote control device 2 in a state in which the displayed cursor image 14a is shifted to some predetermined position, it becomes possible to input the command in the position upon the display screen 15 which is being indicated by the displayed cursor image 14a to the control unit 13.

Next, the operation of the control unit 26 of the remote control device 2 will be explained.

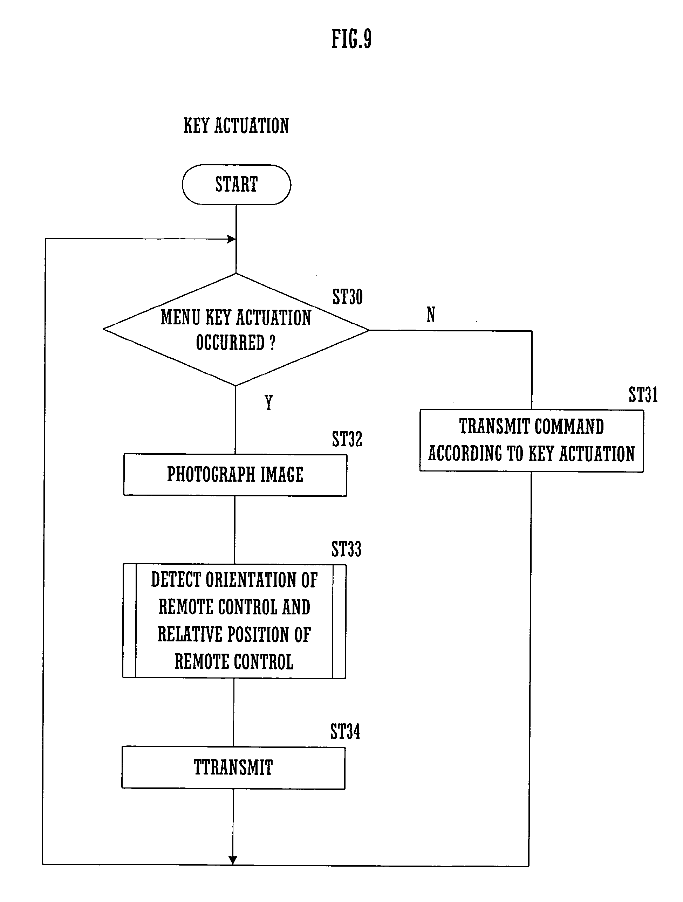

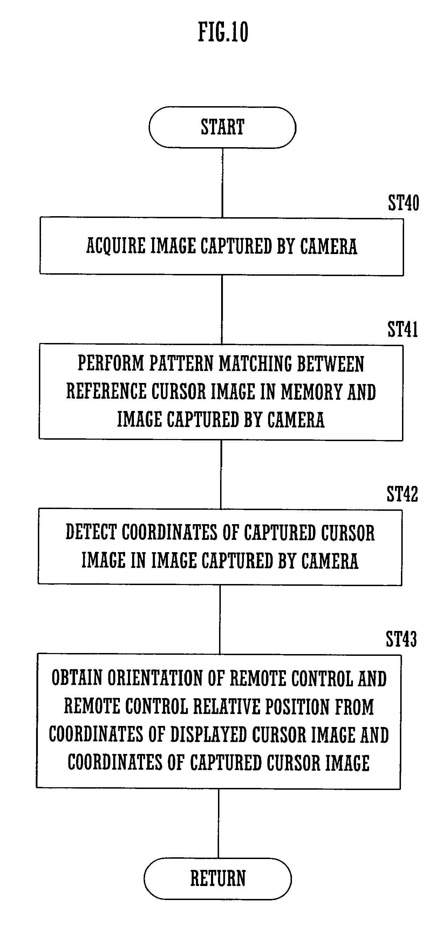

Figs. 9 and 10 are flow charts schematically showing the operation of this control unit 26.

In Fig. 9, when a key is actuated upon the actuation unit 24, a decision is made as to whether or not this key actuation is a menu key actuation (a step ST30). If this is actuation of a normal channel key or is some actuation other than a menu key, then a command corresponding to this key actuation is transmitted to the TV 1 (a step ST31).

However, if in the above step ST30 it is decided that this is a menu key actuation, then the image in front of the camera 20, in other words the image which is being displayed upon the image display unit 10 of the TV 1, is captured by the camera 20 (a step ST32). Moreover, based upon this image which has been captured and a reference cursor image which is stored in the memory 21, an operation of calculating the orientation of the remote control device 2 and the relative position of the remote control device 2 is performed (a step ST33). And the orientation of the remote control device 2 and the relative position of the remote control device 2, obtained in the above described step ST33, are transmitted to the TV 1 (a step ST34).

Fig. 10 shows the details of the operation in the step ST34.

First, the image captured by the camera 20 is acquired (a step ST40). And pattern matching is performed between this image and the reference cursor image which is stored in the memory 21 (a step ST41). By the above pattern matching, the coordinates of the captured cursor image 14b within the image captured by the camera are detected (a step ST42). At this time, the coordinates of at least three points in the captured cursor image 14b are detected, as shown in Fig. 2. And the coordinates of the displayed cursor image 14a at this time are received from the TV 1. The orientation of the remote control device 2 and the relative position of the remote control device 2 are obtained from the coordinates of this displayed cursor image 14a and the coordinates of the captured cursor image 14b (a step ST43). As previously described, along with it being possible to calculate the orientation of the displayed cursor image 14a upon the display screen 15 if the coordinates of three or more points are available, it is also possible to obtain the relative position of the remote control device 2 (i.e. the distance between the remote control device 2 and the TV 1) by calculation. The greater is the number of points (the number of coordinate points) which are used in this calculation, the higher is the accuracy of the calculation. However, the burden upon the control unit 26 becomes heavier to the degree that the amount of calculation is increased.

The data consisting of the orientation of the remote control device 2 and the relative position of the remote control device 2 is received by the TV 1 via its communication unit 12. And, based upon the above described data which has been received, as shown in Fig. 8, the display state of the image displayed upon the display screen 15 is set. In other words, the characters and the displayed image are made the larger, the further the remote control device 2 is from the TV, and moreover the left and right position of the remote control device 2 with reference to the display screen 15 is determined, and the image is displayed in the position closest to the remote control device 2.

In this embodiment, the image generation unit 11 also performs control of the display position of the displayed cursor image 14a, so that the displayed cursor image 14a tracks the remote control device 2.

When the orientation and the relative position of the remote control device 2 can be temporarily detected, this detected data is stored in the control unit 13 of the TV 1. Accordingly, even if the display of the menu image is turned off and the displayed cursor image 14a ceases to be displayed, setting of the display state of the displayed image is performed based upon the above described detected data which is stored. When the menu image is selected for a second time, and the orientation and the relative position of the remote control device 2 are again detected, this detected data replaces the data which has been stored up to this point.

As previously described, it would also be acceptable to arrange to store a menu image in the memory 21 as a reference menu image (i.e. as the predetermined reference image). In this case, pattern matching would be performed between the image captured by the camera in the step ST41 of Fig. 10, and the reference menu image which is stored in the memory 21. And the coordinates of the captured menu image would be detected in the step ST42. Moreover, in the step ST43, the orientation of the remote control device 2 and the relative position of the remote control device 2 would be calculated based upon the coordinates of the displayed menu image (which would be transmitted from the TV 1) and the coordinates of the captured menu image. It should be understood that, if the coordinates of the displayed menu image are fixed, then it would also be acceptable to store these coordinates in the memory 21 in advance. In this case, it would not be necessary to transmit this information from the TV 1. In another embodiment of the present invention it would also be acceptable, when a menu image is displayed upon the TV 1, to arrange to transmit this menu image to the remote control device 2, and to store it as a reference menu image in the memory 21. By doing this, it is possible to set a reference menu image which is stored in the memory 21 appropriately in correspondence to each menu, even if there are a plurality of menu images.

In yet another embodiment of the present invention, the position detection unit 23 which is included in the image processing unit 22 of Fig. 1 may be provided as a component of the TV 1.

In this embodiment, the memory 21 and the position detection unit 23 in the remote control device are unnecessary. On the other hand, it is necessary for the communication unit 25 to be endowed with the function of transmitting the image which is captured by the camera 20 to the TV 1 at high speed. In other words, there is a requirement for providing a high bandwidth communication function to the communication unit 25 of the remote control device 2 and to the communication unit 12 of the TV 1. With this TV 1, the captured image which has been received by the communication unit 12 and the displayed image which is being displayed upon the display screen at that time are compared together, and thereby the orientation and the relative position of the remote control device 2 are detected. This detection method is similar to that in the embodiment described above.

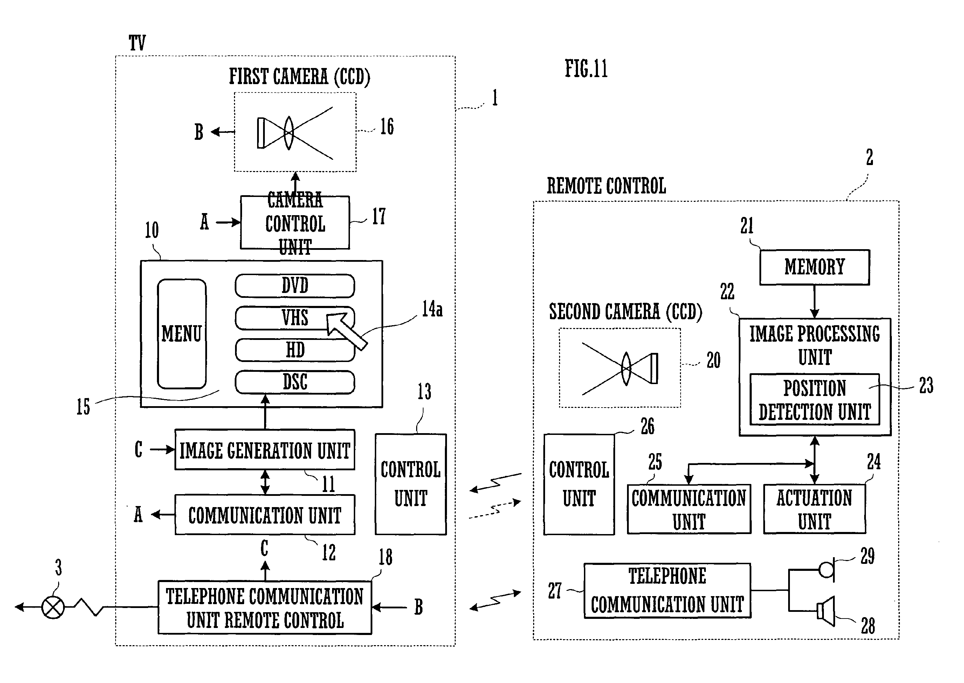

Next, yet another embodiment of the image display system according to the present invention will be explained. Fig. 11 is a structural diagram of this image display system. To elements which are the same as or resemble elements of the image display system shown in Fig. 1, the same reference symbols are appended.

This image display system comprises a TV 1, which is an image display device, and a remote control device 2, and is endowed with the function of serving as a TV telephone. Instead of being the TV 1, the image display device could also be a device such as a personal computer or the like which includes an image display unit.

The TV 1 comprises an image display unit 10, an image generation unit 11, a communication unit 12 which performs communication with the remote control device 2, a control unit 13 which performs overall control of the TV 1, a first CCD camera 16 (hereinafter termed the "first camera"), a camera control unit 17 which performs control of the pan angle, the tilt angle, and the zoom amount of this first camera 16, and a telephone communication unit 18. The first camera 16 is set so that its reference line of sight is in the direction of a normal line to the image display unit.

The image display unit 10 can display a TV image of a channel which has been selected by the remote control device 2 upon the display screen 15, or can display a menu image such as the one shown in the figure. Furthermore, when the TV telephone function has been selected, it can display the image captured by the first camera 16 and an image of the opposite party to a conversation, which is transmitted via a communication circuit 3 (the internet). When a menu image is being displayed, a displayed cursor image 14a as shown in the figure is also displayed. By shifting this displayed cursor image 14a to any desired position with the remote control device 2, and by further performing predetermined key actuation, it is possible to transfer the command indicated by the displayed cursor image 14a to the control unit 13.

The telephone communication unit 18 combines audio data which has been transmitted from the telephone communication unit 27 provided to the remote control device 2 and the image captured by the first camera 16, and transmits the result via the communication circuit 3 to an opposite party with whom a telephone communication link has been established. Moreover, it separates data which has been sent by the opposite party via the communication circuit 3 into image data and audio data, and outputs the image data to the image generation unit 11, while it transmits the audio data to the telephone communication unit 27 of the remote control device 2.

The remote control device 2 comprises a second CCD camera 20 (hereinafter termed the "second camera"), a memory 21 which stores a reference cursor image which is one example of a predetermined reference image, an image processing unit 22 which correlates the coordinates of the captured cursor image 14b which have been captured by the second camera 20 and the coordinates of the displayed cursor image 14a which have been transmitted from the TV 1 and thereby detects the orientation of the remote control device 2 with respect to the image display unit 10 of the TV 1 and the relative position of the remote control device 2 (i.e. the distance between the TV 1 and the remote control device 2), an actuation unit 24, a communication unit 25, a control unit 26, a telephone communication unit 27, a speaker 28, and a mike 29.

The image processing unit 22 comprises a position detection unit 23. This position detection unit 23 obtains the orientation of the remote control device 2 and the relative position of the remote control device 2 with respect to the image display unit 10 by calculation.

The actuation unit 24 includes a plurality of keys, and when each of these keys is actuated, it transmits a corresponding command to the TV 1 via the communication unit 25. The communication unit 25 performs transmission and reception of data to and from the communication unit 12 of the TV 1 by using infrared rays (IrDA) or radio waves upon the multi-GHz band. The telephone communication unit 27 performs communication with a telephone communication unit 18 which is provided to the image display device 1. The data which is communicated is audio data. The audio data which has been captured by the mike 29 is transmitted to the telephone communication unit 18, and audio data which has been sent from the telephone communication unit 18 is outputted by the speaker 28. The control unit 26 performs overall control of the remote control device 2.

The image display system of Fig. 11 has a first function in which the remote control device 2 functions in its normal manner, a second function, and a third function. In the first function, the details of some general actuation (an actuation command) upon the actuation unit 24 (such as a channel selection command) are transmitted to the TV 1.

In the second function, the orientation and the relative position of the remote control device 2, which have been calculated by the position detection unit 23 of the image processing unit 22, are transmitted to the TV 1 by the communication unit 25.

The third function is a TV telephone function.

In this embodiment, it is possible to select the second function and the third function separately, and moreover it is also possible to select them at the same time.

In the second function, cursor shifting is performed with the remote control device 2. The image which is being displayed upon the display screen 15 of the image display unit 10 is captured by the second camera 20, this image which has been captured by the second camera 20 is compared with a reference cursor image stored in the memory 21, and the position of the captured cursor image 14b within the captured image is detected. Next, the coordinates of this displayed cursor image 14a are acquired from the TV 1, these coordinates of the displayed cursor image 14a and the coordinates of the captured cursor image 14b are compared together, and the position upon the display screen 15 of the TV 1 which is being pointed at by the camera 20, in other words the remote pointing position at which the remote control device 2 is pointing, is detected. And the image generation unit 11 tracks the displayed cursor image 14a to this remote pointing position.

In the third function, the TV 1 receives with the communication unit 12 the orientation and the relative position of the remote control device 2, which have been detected by the remote control device 2, and the camera control unit 17 controls the pan angle, the tilt angle, and the zoom amount of the first camera 16, based upon the orientation and the relative position of the remote control device 2. In other words, it performs control of the pan angle and of the tilt angle so that the line of sight direction of the first camera 16 becomes the direction of the remote control device 2, and performs control of the zoom angle so that the image captured by that first camera 16 has a constant size.

In the following, the cases in which the second function and the third function are selected will be explained. Initially, the orientation and the relative position of the remote control device 2 are detected by the position detection unit 23, as described above and explained with reference to Figs. 2 through 5 and Fig. 10.

The orientation and the relative position of the remote control device 2 detected by the position detection unit 23 are transmitted via the communication unit 25 to the TV 1. And the communication unit 12 of the TV 1 receives them. Then the camera control unit 17 controls the pan angle, the tilt angle, and the zoom amount of the first camera 16 based upon the orientation and the relative position of the remote control device 2. In other words, the camera control unit 17 controls the pan angle, the tilt angle, and the zoom amount of the first camera 16 so that the line of sight of the first camera 16 and the position of the remote control device 2 agree with one another. Moreover, the camera control unit 17 controls the zoom amount so that the image captured by the first camera 16 is of constant size.

By the camera control unit 17 exerting control as described above, the first camera 16 is able reliably to capture an image of the face of the user who is holding the remote control device 2, and moreover is able to perform this image capture so that this facial image is of constant size.

In the second function, it is possible to track the displayed cursor image 14a which is being displayed upon the display screen 15 to follow the shifting and the rotational operation of the remote control device 2. In other words, it is possible to shift the displayed cursor image 14a to the position (the remote pointing position) at which the remote control device 2 is pointing.

With regard to this function of tracking the displayed cursor image 14a, this has already been described.

In the third function, the orientation and the relative position (the distance) of the remote control device 2 are detected, and this information is transmitted from the remote control device 2 to the image display device 1. Since the orientation of the remote control device 2 is the same information as the remote pointing position, it can be simply obtained from the remote pointing position. The camera control unit 17 of the image display device 1 controls the pan angle, the tilt angle, and the zoom amount of the first camera 16 based upon the information described above. Moreover, communication with the telephone communication unit 27 on the remote control device 2 is performed by the telephone communication unit 18, and exchange of audio data and image data is performed with the opposite party to the conversation who is connected via the communication circuit 3. The image data which has been received from the opposite party is demodulated by the image generation unit 11 and is displayed upon the image display unit 10 as an image of the appropriate size. And, once the audio data which has been received from the opposite party has been demodulated, it is transmitted to the telephone communication unit 27 of the remote control device 2, and this audio data which has been received by the telephone communication unit 27, it is outputted from the speaker 28. Furthermore, the telephone communication unit 27 of the remote control device 2 transmits the audio data which has been captured by the mike 29 to the telephone communication unit 18 of the image display device 1. Moreover, the image data which has been captured by the first camera 16 is outputted to the image generation unit 11, and, along with this image data being displayed by the image display unit 10, it is also outputted to the telephone communication unit 18. This audio data and voice data are combined by the telephone communication unit 18, and are transmitted to the image display system of the opposite party who is connected via the communication circuit 3.

Next, the operation of the control unit 26 of the remote control device 2, in this embodiment, will be explained.

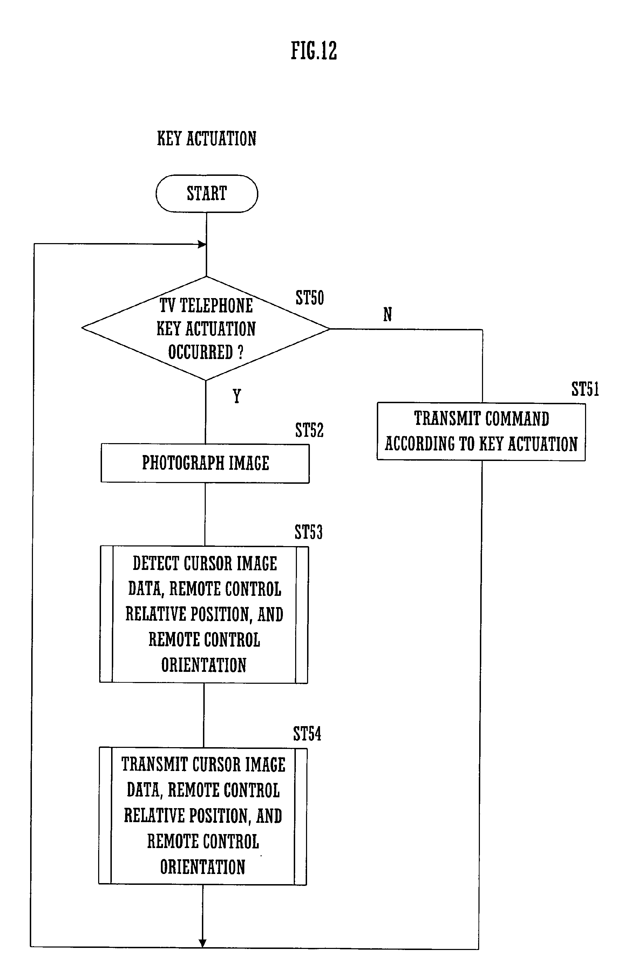

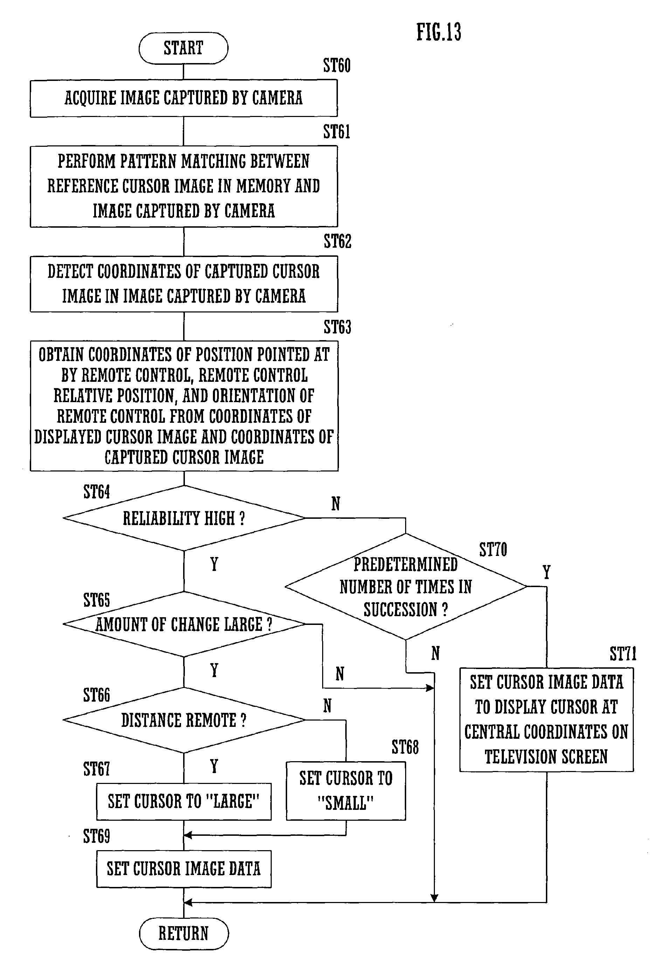

Figs. 12 and 13 are flow charts schematically showing the operation of this control unit 26 when the second function and the third function are selected. In the example shown in these flow charts, when the TV telephone function is selected, the second function and the third function are both selected together.

In Fig. 12, when a key is actuated upon the actuation unit 24, a decision is made as to whether or not this key actuation is a key actuation for selecting the TV telephone function (a step ST50). If this is a normal channel key actuation included in the first function, or the like, then a command corresponding to this key actuation is transmitted to the TV 1 (a step ST51). However, if in the above step ST50 it is decided that this is an actuation for selecting the TV telephone function, then the image in front of the camera 20, in other words the image which is being displayed upon the image display unit 10 of the TV 1, is captured by the second camera 20 (a step ST52). Moreover, based upon this image which has been captured and a reference cursor image which is stored in the memory 21, an operation of calculating cursor image data for determining the display position of the displayed cursor image 14a (i.e. its remote pointing position) and its size, and an operation of detecting the orientation and the relative position of the remote control device 2 by obtaining them from the result of this calculation, are performed (a step ST53). The information which is used in cursor control consists of the remote pointing position and the relative position (i.e. the distance). Moreover, the information which is used in camera control consists of the orientation and the relative position of the remote control device 2. And the cursor image data and the relative position and the orientation of the remote control device 2, obtained in the above described step ST53, are transmitted to the TV 1 (a step ST54).

Fig. 13 shows the details of the operation in the step ST54.

First, the image captured by the second camera 20 is acquired (a step ST60). And pattern matching is performed between this image and the reference cursor image which is stored in the memory 21 (a step ST61). By the above pattern matching, the coordinates of the captured cursor image 14b within the image captured by the camera are detected (a step ST62). At this time, the coordinates of at least three points in the captured cursor image 14b are detected (in the step S62), as shown in Fig. 2. And the coordinates of the displayed cursor image 14a at this time are received from the TV 1. The coordinates of the remote pointing position and the relative position of the remote control device 2 are obtained from the coordinates of this displayed cursor image 14a and the coordinates of the captured cursor image 14b (a step ST63). As previously described, along with it being possible to calculate the remote pointing position of the displayed cursor image 14a upon the display screen 15 if the coordinates of three or more points are available, it is also possible to obtain its relative position (i.e. the distance between the remote control device 2 and the TV 1) by calculation. Moreover, the orientation of the remote control device 2 is detected based upon the remote pointing position, since the remote pointing position is information which specifies the orientation of the remote control device 2. The greater is the number of points (the number of coordinate points) which are used in this calculation, the higher is the accuracy of the calculation. However, the burden upon the control unit 26 becomes heavier to the degree that the amount of calculation is increased.

Next, the reliability of the result which has been calculated as above is determined upon (a step ST64). There are various types of technique for determining this reliability. For example, since the area around the TV 1 is bright, if the density differences in the image captured by the camera 20 are not large, or if the inclination of the remote control device 2 with respect to the display screen 15 of the TV 1 is greater than some fixed value, then it may be decided that the reliability is low. If the reliability is low, then the flow of control proceeds to a step ST70, and a decision is made as to whether or not this decision that the reliability is low has been made a predetermined number of times in succession. If the number of times the decision has been made in succession is less than the predetermined number of times, then the flow of control returns and the above operation is performed again. However, if in the step ST70 it is decided that the decision has been made for the predetermined number of times in succession, then setting of the cursor image data is performed so that the displayed cursor image 14a is displayed in the central position upon the display screen 15 of the TV 1 (a step ST81).

If in the step ST64 described the reliability is greater than the fixed value, then in a step ST65 a decision is made as to whether or not the amount of change is large. In other words, if the remote pointing position or the relative position which has been calculated in the step ST63 is changed from its value when it was calculated in the step ST63 during the previous time this process was executed, and if moreover this amount of change is greater than a fixed value, then the flow of control proceeds to a step ST66. In this step ST66, if the distance between the TV 1 and the remote control device 2 is greater than a fixed distance value, in other words if the relative position obtained in the step ST63 is separated from the TV 1 by more than the fixed distance value, then in a step ST67 a cursor attribute data item is set to "large". But if this is not the case, then in a step ST68 this cursor attribute data item is set to "small". And cursor image data is set which includes this cursor attribute data item and the remote pointing position which was obtained in the step ST63 described above (a step ST69). If in the step ST65 it was decided that the amount of change was small, then setting of change of the cursor coordinates is not performed. Due to this, minute unintentional vibration caused by the camera 20 of the remote control device being shaken by the operator is ignored.

The cursor image data set in the step ST69 described above, or the cursor image data set in the step ST71, and the relative position and the orientation of the remote control device 2 which were calculated in the step ST63, are transmitted to the TV 1 in the step ST54 of Fig. 12.

The above described data is received by the TV 1 via its communication unit 12. And, based upon the above described cursor image data and relative position which have been received, the displayed cursor image 14a is generated by the image generation unit 11. The image display unit 10 displays the displayed cursor image 14a which has been created in this manner upon the display screen 15.

The camera control unit 17 of the TV 1 controls the pan angle, the tilt angle, and the zoom amount of the first camera 16 based upon the above described relative position and orientation of the remote control device 2 which have been received. In other words, it controls those parameters so that the first camera 16 points in the direction of the remote control device 2, and moreover so that the image of a face in the captured image (the image of the face of the user who is holding the remote control device 2) maintains a constant size. Moreover, the captured image is outputted to the image generation unit 11. When the TV telephone function, which is the third function, is selected, the image generation unit 11, along with displaying the image which has been captured by the first camera 16 upon the image display unit 10, also displays the image data which has been separated from the data received by the telephone communication unit 18 upon the image display unit 10.

The telephone communication unit 18 of the TV 1 is set so that a TV telephone call via the communication circuit 3 with an opposite party who has been designated in advance is possible. When the TV telephone function is selected, the telephone communication unit 18 of the TV 1 and the telephone communication unit 27 of the remote control device 2 operate in the following manner.

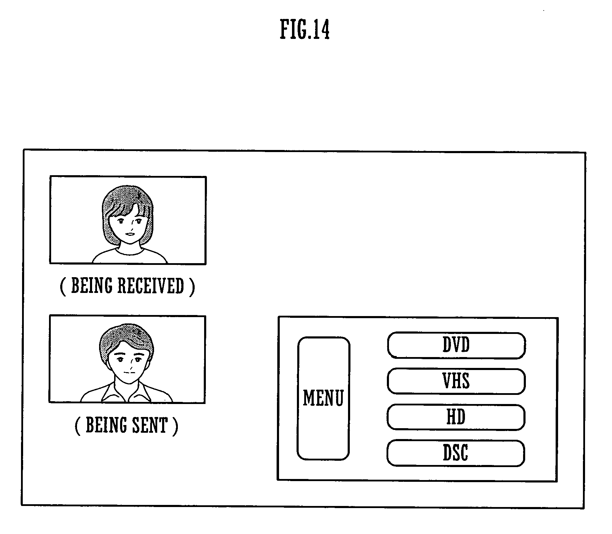

The telephone communication units 18 and 27 are capable of mutual audio data communication, and the telephone communication unit 18 combines and compresses the audio data which it has received from the remote control device 2 and the image which has been captured by the first camera 16, and outputs the result to the communication circuit 3. Moreover, after having demodulated the combined data which it has received from the communication circuit 3, the telephone communication unit 18 separates the audio data and the voice data therefrom, transmits the audio data to the telephone communication unit 27, and outputs the image data to the image generation unit 11. The image which has been captured by the first camera 16 and the image which has been inputted from the telephone communication unit 18 are combined together by the image generation unit 11, and are then displayed upon the image display unit 10. Fig. 14 shows a menu image which is being displayed at the lower right of the screen, the facial image (the image of a face which is being received) of an opposite party during a TV telephone call at the upper left of the screen, and the facial image of the user (the image of the user's face which is being transmitted) at the center left of the screen.

If only the second function has been selected, then the detection of the orientation of the remote control device 2 may be omitted. Moreover, it also is not required to perform the control of the first camera 16. If only the third function has been selected, then initially, once only, the orientation of the remote control device 2 is detected, and it is possible to omit its detection from then onward. In this case, control for the displayed cursor image 14a to track the orientation of the remote control device 2 is not performed.

It should be understood that, as previously described, it would also be acceptable to store a menu image in the memory 21 as a reference menu image (i.e. as the predetermined reference image). In this case, pattern matching would be performed between the image captured by the camera in the step ST61 of Fig. 13, and the reference menu image which is stored in the memory 21. And the coordinates of the captured menu image would be detected in the step ST62. Moreover, in the step ST63, the remote pointing position and the relative position of the remote control device 2 would be calculated based upon the coordinates of the displayed menu image (which would be transmitted from the TV 1) and the coordinates of the captured menu image. It should be understood that, if the coordinates of the displayed menu image are fixed, then it would also be acceptable to store these coordinates in the memory 21 in advance. In this case, it would not be necessary to transmit this information from the TV 1.

Moreover, when actuation of a menu key is detected in the step ST50 of Fig. 12, it would also be possible, temporarily at this time point, to set the cursor image data shown in the step ST71 of Fig. 13, and to transmit this data over to the TV 1. If this is done, then, when actuation of a menu key occurs, the displayed cursor image 14a is directly displayed in the center position of the display screen 15. Accordingly, the comparison in the step S63 of Fig. 13 between the displayed cursor image 14a and the captured cursor image 14b becomes assured.

In another embodiment of the present invention it would also be acceptable to arrange, when a menu image is displayed upon the TV 1, to transmit this menu image to the remote control device 2, and to store this in the memory 21 as the reference menu image. If this is done, even if there are a plurality of menu images, it is still possible to set some reference menu image which is stored in the memory 21 appropriately to correspond to each menu.

In yet another embodiment of the present invention, it is possible to provide the position detection unit 23 which is included in the image processing unit 22 of Fig. 11 as an element of the TV 1.

In this embodiment, the memory 21 and the position detection unit 23 in the remote control device 2 are not required. On the other hand, it is necessary for the communication unit 25 to be endowed with the function of transmitting the image which has been captured by the camera 20 to the TV 1 at high speed. In other words, there is a requirement for providing a high bandwidth communication function to the communication unit 25 of the remote control device 2 and to the communication unit 12 of the TV 1. With this TV 1, the captured image which has been received by the communication unit 12 and the displayed image which is being displayed upon the display screen 15 at that time are compared together, and thereby the remote pointing position and the relative position of the remote control device 2 are detected. This detection method is similar to that in the embodiment described above. And, based upon the remote pointing position which has thus been detected, the image generation unit 11 creates a displayed cursor image 14a for being displayed in this position, and the image display unit 10 displays this displayed cursor image 14a upon the display screen 15. Moreover, the image generation unit 11 changes the size of the displayed cursor image 14a based upon the position (i.e. the relative position) of the remote control device 2 which has been detected.

With the present invention, a predetermined display image which is being displayed upon the image display unit is captured by the camera which is provided to the remote control device. And the coordinates of a predetermined captured image within this image which has been captured (the captured cursor image or the like) and the coordinates of a predetermined display image which has been sent from the image display unit (the displayed cursor image or the like) are compared together, and the remote pointing position or the relative position of the remote control device is detected. With this structure, it is possible to detect the remote pointing position or the relative position correctly, irrespective of the distance between the image display device and the remote control device.

## Claims

1. An image display system comprising:
an image display device (1), comprising an image generation unit (11) which generates an image including a predetermined image, and an image display unit (10) which displays this generated image; and
a remote control device (2), which comprises an actuation unit for controlling display by said image display device (1), and which transmits details of actuation performed upon said actuation unit to said image display device,
**characterized in that** said remote control device (2) comprises a camera (20) which, when said remote control device (2) is pointed towards said image display device (1), can capture an image displayed upon said image display unit (10), and
said image generation unit (11) of said image display device (1) creates an image to be displayed by said image display unit (10), based upon the display state of said displayed image which has been captured by said camera (20).

2. An image display system according to Claim 1, wherein said remote control device (2) further comprises:
a position detection unit (23) which compares together the coordinates of a predetermined display image which is being displayed upon said image display unit (10), which have been acquired from said image display device (1), and the coordinates of the captured image of said predetermined image within the image captured by said camera (20), and thereby detects a remote pointing position upon the display screen (15) of said image display unit (10), at which said remote control device (2) is pointing; and
a transmission unit which transmits said remote pointing position detected by said position detection unit (23) to said image display device (1);
wherein said image generation unit (11) of said image display device (1) creates a displayed cursor image (14a), which is displayed in said remote pointing position.

3. An image display system according to Claim 2, wherein said predetermined display image is a displayed cursor image (14a), and said captured image of the predetermined image is a captured cursor image (14b).

4. An image display system according to Claim 3, wherein:
said remote control device (2) further comprises a memory which stores in advance a reference cursor image which constitutes a reference for said displayed cursor image (14a); and
said position detection unit (23) extracts said captured cursor image (14b) within said reference cursor image by using said reference cursor image which is stored in said memory.

5. An image display system according to Claim 3, wherein said position detection unit (23) further comprises a detection reliability decision unit which decides upon the reliability of detection of said remote pointing position, and wherein, if the reliability of detection by said detection reliability decision unit is lower than a fixed value, said remote pointing position is set so that said displayed cursor image (14a) is displayed in a predetermined position upon said image display unit (10).

6. An image display system according to Claim 5, wherein, at a predetermined timing, said position detection unit (23) further sets said remote pointing position so that said displayed cursor image (14a) is displayed in a predetermined position upon said image display unit.

7. An image display system according to Claim 4, wherein:
said image display device (1) comprises a reference cursor image transmission unit which, at a desired timing, transmits said reference cursor image to said remote control device (2); and
said memory of said remote control device (2) stores said reference cursor image which has been transmitted from said reference cursor image transmission unit.

8. An image display system according to Claim 3, wherein said position detection unit (23) compares together the coordinates of said displayed cursor image (14a) and the coordinates of said captured cursor image (14b), and thereby detects the position of said remote control device (2) relative to said image display device (1).

9. An image display system according to Claim 8, wherein said transmission unit transmits said relative position to said image display device (1), and said image generation unit (11) of said image display device (1) changes the size of said displayed cursor image (14a) which is displayed upon said image display unit (10), according to said relative position.

10. An image display system according to Claim 2, wherein said predetermined displayed image is a displayed menu image, and said captured image of the predetermined image is a captured menu image.

11. An image display system according to Claim 1, wherein:
said remote control device (2) further comprises a displayed image transmission unit which transmits an image, captured by said camera (20) and displayed upon said image display unit (10), to said image display device (1);
said image display device (1) comprises a position detection unit which compares together the coordinates of a captured image of a predetermined image within the displayed image which has been transmitted from said displayed image transmission unit of said remote control device (2), and the coordinates of said predetermined displayed image which is being displayed upon said image display unit, and thereby detects a remote pointing position at which said remote control device (2) is pointing upon the display screen (15) of said image display unit; and
said image generation unit (11) of said image display device (1) generates a displayed cursor image (14a), which it displays in said remote pointing position.

12. An image display system according to Claim 1, wherein said remote control device (2) further comprises:
a position detection unit (23) which compares together the coordinates, acquired from said image display device (1), of a predetermined displayed image which is being displayed upon said image display unit (10), and the coordinates of a captured image of a predetermined image within the displayed image captured by said camera (20), and thereby detects the orientation of said remote control device (2) with respect to said image display unit (10), and the relative position of said remote control device (2), which specifies the distance between said image display unit (10) and said remote control device (2); and
a transmission unit which transmits said orientation and said relative position of said remote control device (2), which have been detected by said position detection unit (23), to said image display device (1);
and said image generation unit (11) of said image display device (1) sets a display state of the image which is displayed upon said image display unit (1), based upon said orientation and said relative position of said remote control device (2).

13. An image display system according to Claim 12, wherein said predetermined displayed image is a displayed cursor image (14a), and said captured image of the predetermined image is a captured cursor image (14b).

14. An image display system according to Claim 13, wherein:
said remote control device (2) further comprises a memory which stores in advance a reference cursor image which constitutes a reference for said displayed cursor image (14a); and
said position detection unit (23) extracts said captured cursor image (14b) within said reference cursor image by using said reference cursor image which is stored in said memory.

15. An image display system according to Claim 12, wherein said image generation unit (11) sets the display state of said displayed image, based upon the orientation of said remote control device (2) which has been transmitted from said transmission unit, so that said displayed image is displayed upon the display screen (15) of said image display unit (10) in the position closest to said remote control device (2).

16. An image display system according to Claim 12, wherein said image generation unit (11) sets the display state of said displayed image, based upon said relative position which has been transmitted from said transmission unit, so that said displayed image is displayed larger, the greater is the distance between said image display unit (10) and said remote control device (2).

17. An image display system, comprising:
an image display device (1), comprising an image generation unit (11) which generates an image including a predetermined image, and an image display unit (10) which displays this generated image;
a remote control device (2), which comprises an actuation unit for controlling display by said image display device (1), and which transmits details of actuation performed upon said actuation unit to said image display device (1); and
a first camera (16) which captures an image of a scene in front of said image display unit (10),
**characterized in that** said remote control device (2) comprises:
a second camera (20) which, when said remote control device (2) is pointed towards said image display device (1), can capture an image displayed upon said image display unit (10);
a position detection unit (23) which compares together the coordinates of a predetermined display image which is being displayed upon said image display unit (10), which have been acquired from said image display device (1), and the coordinates of the captured image of said predetermined image within the image captured by said second camera (20), and thereby detects the orientation of said remote control device (2) with respect to said image display unit (10), and the relative position of said remote control device (2), which specifies the distance between said image display unit (10) and said remote control device (2); and
a transmission unit which transmits said orientation and said relative position of said remote control device (2), detected by said position detection unit (23), to said image display device (1), and
said first camera (16) comprises a camera control unit (17) which controls the image capture direction of said first camera, based upon the orientation and the relative position of said remote control device (2) which have been transmitted from said transmission unit.

18. An image display system according to Claim 17, wherein said predetermined display image is a displayed cursor image (14a), and said captured image of the predetermined image is a captured cursor image (14b).

19. An image display system according to Claim 17, wherein said camera control unit (17) controls the zoom amount of said first camera, based upon the orientation and the relative position of said remote control device (2), which have been transmitted from said transmission unit.

20. An image display system according to Claim 17, wherein said camera control unit (17) controls said zoom amount so that the size of a photographic subject which is captured by said first camera (16) remains fixed, irrespective of said orientation and said relative position of said remote control device (2).

21. An image display system according to Claim 18, wherein:
said remote control device (2) further comprises a memory which stores in advance a reference cursor image which constitutes a reference for said displayed cursor image (14a); and
said position detection unit (23) extracts said captured cursor image (14b) within said reference cursor image by using said reference cursor image which is stored in said memory.
